# FASCICULE DE BREVET EUROPEEN

(11) **EP 0 399 911 B1**
(45) Date de publication et mention de la délivrance du brevet: **14.07.1993**
(21) Numéro de dépôt: 90401382.8
(22) Date de dépôt: 23.05.1990
(51) Int. Cl.: B01J 13/16, A01N 25/28

(54) **Procédé de microencapsulation de produits phytosanitaires par copolymérisation interfaciale**
Verfahren zur Mikroverkapselung nach dem Grenzflächenpolymerisationsverfahren
Process for producing microcapsules by interfacial polymerization

(30) Priorité: 25.05.1989 FR 8906837
(43) Date de publication de la demande: 28.11.1990
(73) Titulaire: ROUSSEL-UCLAF, 75007 Paris (FR)
(72) Inventeur: Meinard, Colette, F-13012 Marseille (FR); Taranta, Claude, F-13090 Aix en Provence (FR)
(74) Mandataire: Tonnellier, Marie-José

(56) Documents cités:
- EP-A- 0 041 210
- DE-A- 2 434 406
- GB-A- 950 443
- GB-A- 2 107 670
- GB-A- 2 184 992

## Description

L'invention a plus précisément pour objet un procédé de microencapsulation d'au moins un principe actif, caractérisé en ce que l'on forme l'enveloppe des microcapsules par copolymérisation interfaciale entre deux phases liquides A et B non miscibles, la phase organique A contenant :
- un ou plusieurs principes actifs non hydrosolubles et ne réagissant pas entre eux ;
- un monomère polyfonctionnel a, solvant du ou des principes actifs choisi parmi les dérivés diesters de l'acide phtalique et la phase aqueuse B contenant :
- un monomère polyfonctionnel b ;
- un catalyseur.

Selon l'invention, la mise en oeuvre du procédé de microencapsulation peut s'effectuer notamment soit en dispersant la phase organique A dans la phase aqueuse B, soit en émulsifiant la phase A dans une phase aqueuse et en ajoutant progressivement le monomère polyfonctionnel b.

Le ou les principes actifs utilisé peuvent être en particulier des produits du domaine phytosanitaire, du domaine pharmaceutique, humain ou animal ou des produits obtenus par des procédés chimiques ou microbiologiques tels que virus ou enzymes.

Le procédé objet de la présente invention peut donc également trouver des applications dans les domaines tels que cosmétiques, alimentaires ou celui des peintures.

La réaction de copolymérisation intervenant dans le procédé de l'invention met en jeu deux monomères polyfonctionnels a et b chimiquement différents, l'un pouvant être par exemple trifonctionnel, l'autre bifonctionnel. Ces monomères sont alors susceptibles de réagir pour former entre eux des liaisons covalentes. Ceci permet donc la formation d'une pellicule copolymérique à l'interface des deux phases non miscibles, pellicule qui constitue l'enveloppe même des microcapsules.

Cette phase de copolymérisation-encapsulation est réalisée sous agitation de préférence à une vitesse de l'ordre de 400 à 4000 tours/minute et à une température pouvant varier entre 40° et 70°C. A ce propos, il est à noter que la température influe sur le temps de réaction et que la vitesse d'agitation influe, elle, sur le diamètre des microcapsules.

Selon le procédé de l'invention, la copolymérisation interfaciale conduit à l'encapsulation de la phase organique A contenant le ou les principes actifs. La microencapsulation terminée, on opère un retour à la température ambiante, filtre et sèche les microcapsules. Ce séchage peut se faire par exemple sur colonne à lit fluidisé ou sur papier filtre sous hotte ventilée à courant d'air chaud.

Dans la phase organique A, on peut également introduire soit des stabilisants anti U.V. tels des benzophénones ou benzotriazones, soit des filtres U.V., par exemple des colorants comme les diazoïques.

Dans cette phase organique A, le monomère polyfonctionnel a est de préférence le phtalate de méthyle, d'éthyle, de butyle ou d'allyle, utilisé seul ou couplé avec un autre solvant par exemple un solvant hydrocarboné aromatique tel que celui commercialisé sous le nom de "Solvesso 150 ® (EXXON)".

Dans la phase aqueuse B, le monomère polyfonctionnel b utilisé est de préférence une résine aminoplaste. La résine aminoplaste est notamment une résine mélamine formol polyméthylée : elle peut être tri ou hexaméthylol. Cette résine est par exemple la résine mélamine triamino-2,4,6 triazine-1,3,5-cyanuramide triméthylée commercialisée sous le nom de "PROX M 3R ® (PROTEX)".

Dans la phase aqueuse B, le catalyseur nécessaire pour assurer la copolymérisation peut être de l'acide citrique mais on peut se servir également d'autres catalyseurs tels que du chlorure d'ammonium.

L'invention a plus particulièrement pour objet le procédé de microencapsulation, caractérisé en ce que la phase organique A renferme :
- de 0,1 à 25% de principe actif non hydrosolyble ;
- de 7,5 à 90% de monomère polyfonctionnel a ;
- de 0 à 25% de solvant.

Elle a encore pour objet le procédé de microencapsulation caractérisé en ce que la phase aqueuse B renferme :
- de 59 à 94,9% d'eau ;
- de 5 à 40% de monomère polyfonctionnel b ;
- de 0,1 à 1% de catalyseur.

L'invention a plus particulièrement pour objet le procédé de microencapsulation caractérisé en ce que le ou les principes actifs utilisés sont des produits phytosanitaires tels que insecticides, acaricides, herbicides, fongicides, notamment choisis, pour les premiers, dans le groupe des pyréthrinoïdes, comme par exemple la deltaméthrine, la téfluthrine, le (1R,cis,Z) 2,2-diméthyl 3-[3-[2-(1,1,1,3,3,3)-hexafluoro] propoxy 3-oxo 1-propényl] cyclopropane carboxylate de (S)-alpha cyano 3-phénoxybenzyle, le (1R,cis) 2,2-diméthyl 3-(2-fluoro 3-méthoxy 3-oxo 1-(E)-propényl) cyclopropane carboxylate de pentafluorophénylméthyle.

Les microcapsules obtenues par le procédé de la présente invention sont particulièrement intéressantes parce qu'elles permettent par la structure et la porosité de leur membrane une diffusion progressive du principe actif (vers la cible visée). Cette membrane protège les principes actifs de certains facteurs chimiques ou physiques que sont l'humidité, la chaleur, l'oxydation et la volatilisation excessive.

Lorsqu'elles trouvent leur application dans le domaine phytosanitaire, les microcapsules, par leur libération contrôlée réduisent les risques de pollution, de toxicité, d'irritabilité mais aussi les doses et cadences de traitement.

Ces microcapsules, obtenues par le procédé de la présente invention, sont notamment caractérisées en ce qu'elles sont constituées de microsphères de 10 à 200 µm de diamètre moyen ; on peut changer la taille des microcapsules en faisant varier la vitesse d'agitation ou l'épaisseur de la paroi par modification de la concentration initiale en résine aminoplaste.

Les microcapsules selon l'invention sont préférentiellement destinées à une dilution en milieu pulvérulent, mais peuvent également être utilisées sous forme de "flowables" ou de granulés. Elles peuvent ainsi trouver une application dans les traitements du sol.

Les exemples suivants illustrent l'invention sans toutefois la limiter.

### EXEMPLE 1: Préparation des microcapsules de (1R,cis) 2,2-diméthyl 3-[2-fluoro 3-méthoxy 3-oxo 1-(E) propényl] cyclopropane carboxylate de pentafluorophénylméthyle.

### STADE A : Préparation de l'émulsion.

On émulsionne une phase organique A dans une phase aqueuse B.

La phase A renferme :
- 0,18 g de (1R,cis) 2,2-diméthyl 3-[2-fluoro 3-méthoxy 3-oxo 1-(E) propényl] cyclopropane carboxylate de pentafluorophénylméthyle ;
- 18,11 g de phtalate de méthyle ;
- 1,71 g de solvant Solvesso 150 ® ;

Total = 20 g.

La phase B renferme :
- 80 g d'eau distillée ;
- 0,5 g d'acide citrique.

Afin de faciliter l'émulsion, on procède à une agitation de 750 tours/minute à température ambiante : le pH est alors égale à 6,4.

### STADE B : Microencapsulation.

On amorce la réaction en ajoutant à l'émulsion 1,5 g de résine à 50% 5 W/W dans l'eau PROX M 3R ® . On chauffe à une température de 65°C, le pH descend de 6,4 à 4,8 au bout de 2 heures et demie et la réaction de polymérisation débute.

On alimente progressivement le milieu en résine à 50% 5 W/W dans l'eau jusqu'à épuisement de la réaction en ajoutant 12,5 g de PROX M 3R ®.

La microencapsulation terminée, après retour à la température ambiante au bout d'une heure, on filtre et on sèche les microcapsules obtenues.
- Résultat :: Microcapsules dont le diamètre moyne = 100 µ.
- Analyse :: CLHP : 0,7% W/W.

### EXEMPLE 2 :

On suit le même procédé de préparation des microcapsules en modifiant les quantités initiales des composants de la phase organique A ; la phase A renferme :
- 1,80 g de (1R,cis) 2,2-diméthyl 3-[2-fluoro 3-méthoxy 3-oxo 1-(E) propényl] cyclopropane carboxylate de pentafluorophénylméthyle ;
- 16,49 g de phtalate de méthyle ;
- 1,71 g de solvant Solvesso 150 ® ;

Total = 20 g.
- Résultat :: Microcapsules dont le diamètre moyne = 100 µ.
- Analyse :: CLHP : 0,7% W/W.

### EXEMPLE 3 :

On suit le même procédé de préparation des microcapsules en modifiant les quantités initiales des composants de la phase organique A ; la phase A renferme :
- 3,43 g de (1R,cis) 2,2-diméthyl 3-[2-fluoro 3-méthoxy 3-oxo 1-(E) propényl] cyclopropane carboxylate de pentafluorophénylméthyle ;
- 14,86 g de phtalate de méthyle ;
- 1,71 g de solvant Solvesso 150 ® ;

- Résultat :: Microcapsules dont le diamètre moyne = 100 µ.
- Analyse :: CLHP : 13,40% W/W.

## Revendications

1. Procédé de microencapsulation d'au moins un principe actif, caractérisé en ce que l'on forme l'enveloppe des microcapsules par copolymérisation interfaciale entre deux phases liquides A et B non miscibles, la phase organique A contenant :
- un ou plusieurs principes actifs non hydrosolubles et ne réagissant pas entre eux ;
- un monomère polyfonctionnel a, solvant du ou des principes actifs choisi parmi les dérivés diesters de l'acide phtalique et la phase aqueuse B contenant :
- un monomère polyfonctionnel b ;
- un catalyseur.

2. Procédé de microencapsulation selon la revendication 1, caractérisé en ce que :
- soit l'on disperse la phase A dans la phase B ;
- soit l'on émulsionne la phase A dans une phase aqueuse et l'on ajoute progressivement le monomère polyfonctionnel b.

3. Procédé selon l'une quelconque des revendications 1 ou 2, caractérisé en ce que le monomère polyfonctionnel b est une résine aminoplaste.

4. Procédé selon la revendication 3, caractérisé en ce que le monomère polyfonctionnel b est une résine mélamine triamino-2,4,6 triazine-1,3,5-cyanuramide polyméthylée.

5. Procédé selon l'une quelconque des revendications 1 à 4, caractérisé en ce que la phase organique A utilisée renferme :
- de 0,1 à 25% de principe actif non hydrosolyble ;
- de 7,5 à 90% de dérivé diester de l'acide phtalique
- de 0 à 25% de solvant.

6. Procédé selon l'une quelconque des revendications 1 à 5, caractérisé en ce que la phase aqueuse B utilisée renferme :
- de 59 à 94,9% d'eau ;
- de 5 à 40% de monomère polyfonctionnel b ;
- de 0,1 à 1% de catalyseur.

7. Procédé selon l'une des revendications 1 à 6, caractérisé en ce que le principe actif utilisé est un produit phytosanitaire, choisi dans le groupe des pyréthrinoïdes.

8. Procédé selon la revendication 7, caractérisé en ce que le pyréthrinoïde utilisé est choisi parmi la deltaméthrine, la téfluthrine, le (S) alpha cyano 3-phénoxybenzyle (1R,cis,Z) 2,2-diméthyl 3-[3-[2-(1,1,1,3,3,3)-hexafluoro] propoxy 3-oxo 1-propényl] cyclopropane carboxylate de (S)-alpha cyano 3-phénoxybenzyle, et le (1R,cis) 2,2-diméthyl 3-(2-fluoro 3-méthoxy 3-oxo 1-(E)-propényl) cyclopropane carboxylate de pentafluorophénylméthyle.

## Patentansprüche

1. Verfahren zur Mikro verkapselung zumindest eines Wirkstoffes, dadurch gekennzeichnet, daß man die Umhüllung der Mikrokapseln durch Grenzflächen-Copolymerisation zwischen zwei nicht mischbaren, flüssigen Phasen A und B bildet, wobei die organische Phase A enthält:
- einen oder mehrere Wirkstoffe, die nicht wasserlöslich sind und nicht untereinander reagieren;
- ein polyfunktionelles Monomeres a, Lösungsmittel des oder der Wirkstoffe, ausgewählt unter den Diesterderivaten der Phthalsäure, und die wäßrige Phase B enthält:
- ein polyfunktionelles Monomeres b;
- einen Katalysator.

2. Verfahren zur Mikro verkapselung gemäß Anspruch 1, dadurch gekennzeichnet, daß man
- entweder die Phase A in der Phase B dispergiert;
- oder die Phase A in einer wäßrigen Phase emulgiert und allmählich das polyfunktionelle Monomere b zugibt.

3. Verfahren gemäß einem der Ansprüche 1 oder 2, dadurch gekennzeichnet, daß das polyfunktionelle Monomere b ein Aminoplastharz ist.

4. Verfahren gemäß Anspruch 3, dadurch gekennzeichnet, daß das polyfunktionelle Monomere b ein polymethyliertes 2,4,6-Triamino-1,3,5-triazin-cyanuramid-Melaminharz ist.

5. Verfahren gemäß einem der Ansprüche 1 bis 4, dadurch gekennzeichnet, daß die verwendete organische Phase A umfaßt:
0,1 bis 25% nicht-wasserlöslichen Wirkstoff;
7,5 bis 90% Diesterderivat der Phthalsäure;
0 bis 25% Lösungsmittel.

6. Verfahren gemäß einem der Ansprüche 1 bis 5, dadurch gekennzeichnet, daß die verwendete wäßrige Phase B umfaßt:
59 bis 94,9% Wasser;
5 bis 40% polyfunktionelles Monomeres b;
0,1 bis 1% Katalysator.

7. Verfahren gemäß einem der Ansprüche 1 bis 6, dadurch gekennzeichnet, daß der verwendete Wirkstoff ein Produkt für den Pflanzenschutz, ausgewählt unter den Pyrethrinoiden, ist.

8. Verfahren gemäß Anspruch 7, dadurch gekennzeichnet, daß das verwendete Pyrethrinoid ausgewählt wird unter Deltamethrin, Tefluthrin, (S)-α-Cyano-3-phenoxybenzyl-(1R,cis,Z)-2,2-dimethyl-3-[3-[2-(1,1,1,3,3,3)-hexafluor]-propoxy-3-oxo-1-propenyl]-cyclopropancarboxylat von (S)-α-Cyano-3-phenoxybenzyl und Pentafluorphenylmethyl-(1R,cis)-2,2-dimethyl-3-(2-fluor-3-methoxy-3-oxo-1-(E)-propenyl)-cyclopropancarboxylat.

## Claims

1. Microencapsulation process for at least one active ingredient, characterized in that the coating of the microcapsules is formed by the interfacial copolymerisation between two non-miscible liquid phases A and B, the organic phase A containing:
- one or more non-hydrosoluble active ingredients which do not react with each other;
- a polyfonctional monomer a, solvent of the active ingredient or ingredients chosen from diester derivatives of phthalic acid and the aqueous phase B containing:
- a polyfonctional monomer b;
- a catalyst.

2. Microencapsulation process according to claim 1, characterized in that:
- either phase A is dispersed in phase B;
- or phase A is emulsified in an aqueous phase and the polyfonctional monomer b is added progressively.

3. Process according to any one of claims 1 or 2, characterized in that the polyfonctional monomer b is an aminoplastic resin.

4. Process according to claim 3, characterized in that the polyfonctional monomer b is a polymethylated triamino-2,4,6 triazine-1,3,5-cyanuramide melamine resin.

5. Process according to any one of claims 1 to 4, characterized in that the organic phase A used contains:
- 0.1 to 25% of non-hydrosoluble active ingredient;
- 7.5 to 90% of the diester derivative of phthalic acid
- 0.1 to 25% of solvent.

6. Process according to any one of claims 1 to 5, characterized in that the aqueous phase B used contains:
- 59 to 94.9% of water;
- 5 to 40% of polyfonctional monomer b;
- 0.1 to 1% of catalyst.

7. Process according to one of the claims 1 to 6, characterized in that the active ingredient used is a phytopathological product, chosen from the pyrethrinoid group.

8. Process according to claim 7, characterized in that the pyrethrinoid used is chosen from deltamethrin, tefluthrin, (S) alpha cyano 3-phenoxybenzyl (1R,cis,Z) 2,2-dimethyl 3-[3-[2-(1,1,1,3,3,3)-hexafluoro] propoxy 3-oxo 1-propenyl] cyclopropane carboxylate, and pentafluorophenylmethyl (1R, cis) 2,2-dimethyl 3-(2-fluoro 3-methoxy 3-oxo 1-(E)-propenyl) cyclopropane carboxylate.
